# EUROPEAN PATENT SPECIFICATION

(11) **EP 4 171 793 B1**
(45) Date of publication and mention of the grant of the patent: **20.03.2024**
(21) Application number: 21734142.9
(22) Date of filing: 22.06.2021
(51) Int. Cl.: B01J 8/04

(54) **MULTI-BED AMMONIA CONVERTER**
MEHRBETT-AMMONIAKKONVERTER
CONVERTISSEUR D'AMMONIAC À LITS MULTIPLES

(30) Priority: 25.06.2020 EP 20182172
(43) Date of publication of application: 03.05.2023
(73) Proprietor: CASALE SA, 6900 Lugano (CH)
(72) Inventor: RIZZI, Enrico, 22070 Casnate con Bernate (CO) (IT); MASANTI, Matteo, 22010 Musso (CO) (IT)
(74) Representative: M. Zardi & Co S.A.
(86) International application number: PCT/EP2021/066996
(87) International publication number: WO 2021/259930

(56) References cited:
- EP-A2- 0 297 474
- WO-A1-99/44939
- GB-A- 2 075 859
- US-A- 5 171 543
- US-A- 5 959 154

## Description

### Field of application

The invention relates multi-bed catalytic ammonia converters.

### Prior art

Multi-bed catalytic converters contain a plurality of catalytic beds traversed sequentially by a process gas. By passing through the sequence of catalytic beds, a reactant gas is gradually converted into a product gas. Multi-bed converters are typically used for the synthesis of ammonia starting from a makeup gas made essentially of hydrogen and nitrogen.

The term ammonia converter denotes a chemical reactor arranged to catalytically convert a makeup gas into ammonia. The makeup gas contains ammonia and hydrogen in a suitable proportion and may be obtained by reforming.

A common design of ammonia multi-bed converters includes catalytic beds with a cylindrical annular configuration. Each catalytic bed is basically an annulus of a cylinder delimited by an outer wall and an inner wall. Said outer wall and inner wall are designed to be gas-permeable and suitable to retain the catalyst, which is e.g. in a granular form.

The synthesis of ammonia is a strongly exothermic process which means that a large amount of heat is generated in the process and the effluent of each catalytic bed has a high temperature.

An inter-bed heat exchanger can be mounted in the central cavity of a catalytic bed in order to remove heat from the effluent and reduce the inlet temperature of the next bed, and recover heat at the same time.

The number of catalytic beds may vary. A typical embodiment of an ammonia converter has three catalytic beds and two inter-bed coolers wherein a first interbed heat exchanger is placed in the internal cavity of the first bed and a second inter-bed heat exchanger is placed in the internal cavity of the second bed. The converter is typically a vertical apparatus and the catalytic beds are arranged vertically one above the other. Each of the inter-bed heat exchangers is generally realized with a bundle of tubes. The tubes are arranged in the central cavity of the bed, the hot process gas flowing around the tubes and the cold gas flowing inside the tubes.

In the prior art ammonia converters, the inter-bed heat exchangers are arranged to transfer heat from the hot partially reacted process gas to the inlet fresh gas or portions thereof. For example the heat exchanger positioned inside the first bed transfers heat from the partially reacted gas effluent from the first bed to a stream of fresh gas directed to the input of the first bed itself, which is suitably preheated.

The effluent of the converter (i.e. effluent of the last bed) is normally passed through a recovery heat exchanger outside the pressure vessel of the converter. This heat exchanger is generally used to produce saturated steam or hot water.

Accordingly, it can be said the heat of reaction transferred in the inter-bed exchangers is recycled internally in the reactor itself and in the process of synthesis of ammonia. Only the effluent of the last bed is generally available for a heat recovery such as production of steam or hot water, at the expense of installation of a heat exchanger external to the converter.

A disadvantage of this technique is that the heat at elevated temperature produced by the reaction, particularly of the effluent of the first bed which may be above 500 °C, is not recovered optimally.

Particularly, it would be interesting to produce superheated steam using the heat liberated by the ammonia converter because superheated steam can be used to power a steam turbine. However the effluent of the converter typically has a temperature which is insufficient for this purpose. A boiler installed downstream the converter can generally produce saturated steam which is however less attractive from the energetic point of view and is not appropriate to drive a turbine. This steam may be superheated at the expense of fuel which is however an additional cost.

An ammonia plant has a complex steam system including steam producers and steam users. Steam users include for example turbines which drives utilities such as compressors. There is an incentive to produce steam internally in the process, which may be used as a heat source for other process steps or to drive turbines or exported if possible. The prior art does not fully satisfy this need.

Still another problem is that the amount of heat that can be recovered from the effluent of the converter depends on the temperature profile of the catalytic beds. Attempts to increase the recoverable heat may negatively affect the operation of the catalytic beds. In the ammonia synthesis, the recovery of the heat generated by the synthesis is considered of a fundamental importance. To increase the recoverable heat, the reactor inlet temperature should be increased as much as possible, but increasing this inlet temperature would generally cause the catalytic bed to operate away from the optimal temperature profile.

The converter outlet temperature may also be increased by increasing specifically the inlet temperature of the last bed. In this way however the temperature profile inside the last bed is not optimized. The last bed is generally the largest in terms of volume and if the last bed operates away from optimal conditions the overall performance of the converter is highly affected, e.g. in terms of ammonia outlet concentration and conversion per pass.

Moreover, to optimize the temperature profile inside the converter, it is necessary to enter the converter with a quite cold stream of synthesis gas. In the prior art layout the ammonia converter may be regarded essentially as an adiabatic equipment and therefore the outlet temperature is directly proportional to the inlet temperature. It follows that the outlet temperature typically quite low, making it suitable for heat recovery only at a very low level.

A prior art solution to produce superheated steam suggests to split the ammonia converter into two separate pressure vessels operating in series. In this configuration each pressure vessel contains one or two catalytic beds. By doing so, a steam superheater can be arranged between the first pressure vessel and the second pressure vessel, to recover heat from the hot effluent of the first vessel.

This solution however has some drawbacks. It requires at least an additional pressure vessel for the converter and also an additional pressure vessel for the steam superheater. It also requires expensive piping, connections and foundations between said items for streams at high pressure and high temperature, introducing loss of heat and pressure drops. These items introduce a significant cost because ammonia is produced at a high pressure of about 100 bar or above, therefore any pressure vessel or piping is quite expensive. The control of the process requires installation of valves on said connections, which means said valves must work at high temperature and high pressure and, consequently, are expensive.

Catalytic reactors with internal heat exchangers are described in US 5 171 543, GB 2 075 859, US 5 959 154, EP 0 297 474 and WO 99/44939.

### Summary of the invention

The invention aims to solve the above drawbacks and limitations of the prior art.

This aim is reached with an ammonia converter according to the claims, which includes at least one integrated recovery heat exchanger which has a first side arranged to be traversed by partially reacted gas effluent from at least one of the catalytic beds and a second side arranged to be traversed
by a heat exchange medium which is not a reactive stream directed to any of the catalytic beds of the converter.

Said integrated recovery heat exchanger is an indirect heat exchanger, i.e. the first side and the second side are not in fluid communication. The integrated recovery heat exchanger forms a single item with the ammonia converter. The integrated recovery heat exchanger may be partially or entirely contained in the pressure vessel of the converter.

Said recovery heat exchanger is configured to transfer the heat of the reaction to a medium which is not a reactive gas intended to flow through one or more of the catalyst beds. Particularly said medium is not the reactive makeup gas or a stream containing reactive gas directed to any of the catalytic beds. It follows that said recovery heat exchanger may be regarded as an internal heat sink of the converter, wherein heat liberated in the reaction can be transferred to an external medium.

Accordingly the ammonia converter is no longer adiabatic equipment. The outlet temperature of the converter is not dictated solely by the inlet temperature and it is possible to optimize the reactor internal temperature profile while increasing the reactor inlet temperature to recover more of the heat of ammonia synthesis. Thanks to the internal heat sink provided by the integrated heat exchanger, this heat recovery does not affect the beds inlet temperature optimization.

The recovery heat exchanger and the inter-bed exchanger are arranged to be traversed in sequence by the hot process gas effluent from the bed, so that the effluent of the bed traverses the recovery heat exchanger first, and then the inter-bed heat exchanger. Accordingly the recovery heat exchanger benefits from the highest temperature of the hot gas.

In a preferred embodiment said recovery heat exchanger is connected to a steam system and said medium is boiling water or steam. Particularly, the ammonia converter may be part of an ammonia plant which includes a steam system and said recovery heat exchanger may be connected to the steam system and used to produce steam or to superheat a saturated steam.

The term steam system denotes equipment for the generation of steam by recovering heat liberated in a process; the steam so produced may be used
internally in the process, e.g. to provide power or heat to steam users of the ammonia plant, or exported.

The invention has a remarkable advantage in that the heat at high temperature which can be recovered from the effluent of the first bed can be used in a more thermodynamically efficient way, producing steam or superheated steam which is suitable e.g. to drive a turbine.

At the same time, the disadvantages of an external piping at high-pressure and high-temperature are avoided. Particularly the pressure drop and heat loss of such piping is avoided. The need for additional pressure vessels and related cost is also eliminated. Still another advantage is that the process can be controlled with valves installed on gas lines at a low temperature, as will be explained below. Accordingly the cost for the equipment is reduced.

An aspect of the invention is also a process according to the claims wherein the process includes transferring heat from the effluent of at least one of the catalytic beds to a heat exchange medium, wherein said transfer of heat is performed in a recovery heat exchanger which is integrated in the ammonia converter and said heat exchange medium is not a reactive stream of the ammonia synthesis process.

Still another object of the invention is an ammonia plant including the ammonia converter and a steam system, wherein the second side of the recovery heat exchanger, which is integrated in the ammonia converter, is connected to the steam system. For example the second side of the recovery heat exchanger has an input connected to a water feed line and an output connected to a steam line; or an input connected to a saturated steam line and an output connected to a line of superheated steam.

### Preferred embodiments

Said recovery heat exchanger may include a plurality of heat exchange elements and optionally a shell around the heat exchange elements. Accordingly said first side is a region around the tubes heat exchange elements, possibly contained within the shell, and said second side is an inside of the heat exchange elements. The heat exchange elements are internally traversed by the heat exchange medium.

Preferably said heat exchange elements include tubes. Particularly preferably they include u-tubes or bayonet tubes. When the recovery heat exchanger is a tube heat exchanger said first side is a region around the tubes and said second side (tube side) is the inside of the tubes.

Said recovery exchanger may be realized for example with a bundle of tubes installed in the upper part of the converter. An advantage is that the exchanger does not need an additional shell.

In a preferred embodiment said recovery heat exchanger is a tube heat exchanger with a bundle of u-tubes or bayonet tubes connected to a tube sheet. The tube sheet may be on top of the heat exchanger and the bundle of tubes may extend downwards from the tube sheet.

An advantage of this embodiment with u-tubes or bayonet tubes is that the recovery heat exchanger requires only one tube sheet. The sole tubesheet of the heat exchanger may be easily accessible on top of the reactor. Still another advantage is the bundle of tubes can be removed (extracted from above the converter) if necessary, without any access to the internals of the converter.

The tube sheet of the bundle of tubes may be located above a top cover of the pressure vessel of the ammonia converter. This arrangement facilitates extraction and removal of the bundle of tubes from the converter without having to remove the cover of the pressure vessel.

In another embodiment the pressure vessel of the ammonia converter may have a top cover which includes a shell of the recovery heat exchanger.

In some embodiments said recovery heat exchanger is at least partially accommodated in the central cavity of at least one of the catalytic beds. Particularly the recovery heat exchanger may be partially accommodated or completely accommodated in the central cavity of at least one of the catalytic beds.

The central cavity of a catalytic bed may accommodate a portion of said recovery heat exchanger in addition to an inter-bed heat exchanger arranged to transfer heat from the hot effluent of the catalytic bed to a stream of reactant gas directed to the inlet of the same bed or of another bed.

The at least one recovery heat exchanger may include a recovery heat exchanger which is located above the first catalytic bed of the converter and is arranged so that the first side of the recovery heat exchanger is traversed by the effluent of said first catalytic bed.

The at least one recovery heat exchanger may include a heat recovery exchanger which is placed downstream the second catalytic bed of the converter so that the first side of the recovery heat exchanger is traversed by the effluent of said second catalytic bed.

In a preferred embodiment the ammonia converter is vertically arranged and the catalytic beds are aligned vertically, the first catalytic bed being on top of the converter. The integrated recovery heat exchanger is installed in the upper part of the converter and above the first catalytic bed, so that it extends mainly above the first catalytic bed. A bottom part of said recovery heat exchanger may be received within the central cavity of the first catalytic bed. For example the bottom part may include the curved portion of a bundle of u-tubes. According to this embodiment, the first side of the recovery heat exchanger, e.g. the space around the tubes, is traversed by the hot effluent of the first catalytic bed.

Preferably the heat exchange medium in the second side of the recovery heat exchanger is water or steam.

The recovery heat exchanger may be arranged for connection to a steam system.

In an embodiment said recovery heat exchanger is a steam superheater; said heat exchanger has an input connected to a steam line (e.g. saturated steam) and an output connected to a superheated steam line.

In another embodiment said recovery heat exchanger is a boiler; said heat exchanger has an input connected to a water line and an output connected to a steam line.

By transferring heat to steam, the integrated recovery exchanger can recover the high-temperature heat of a hot bed effluent in an efficient manner and without affecting the working temperature of the beds, e.g. without increasing their working temperature above the optimum values.

In a preferred embodiment the catalytic beds are vertically arranged one above another according to their sequential order, so that for each pair of adjacent beds the underlying bed receives the effluent of the bed above, the first catalytic bed being on top of the converter. In a typical embodiment the number of catalytic beds is three; however a different number is possible.

Still another advantage of the invention is a better use of the internal volume of the ammonia converter. It must be noted that the pressure vessel of the converter is expensive, therefore the volume itself is expensive and its efficient use is a considerable advantage.

For example in a vertical converter the installation of the recovery heat exchanger on top of the converter makes an efficient use of the upper region of the converter in the zone between the top cover of the catalytic cartridge and the top cover of the pressure vessel of the converter. In the prior art this volume is not used efficiently; in the invention it can be used for the installation of an integrated heat exchanger.

Further preferred aspects of the invention are the following.

The recovery heat exchanger may include a shell, around the heat exchange elements, having a diameter smaller than the outer diameter of the annular catalyst beds. A related advantage is that any loss of the heat exchange medium from the heat exchange elements can be conveyed to avoid contact with the ammonia synthesis catalyst and can be measured after the converter shut down.

The recovery heat exchanger may be equipped with a level measurement system to monitor such losses (e.g. losses of water).

In some embodiments it can be preferred that the pressure of the heat exchange medium in the heat exchange elements be lower than the pressure of the reactant process stream in the ammonia converter. An advantage is that in the event of breakage of an element or failure of the recovery heat exchanger, the difference of pressure avoids contact between the medium in the recovery heat exchanger (e.g. water) and the ammonia synthesis catalyst.

In other embodiments it can be preferred that the pressure in the heat exchange elements be greater than the pressure of the reactant process stream. In that case, in the event of breakage or failure of the recovery heat exchanger, it is avoided any contact between the reactant process stream and the internal part of the heat exchange elements.

The converter may be governed by a control system including a shutdown procedure configured to avoid contact between the heat exchange medium flowing inside the heat recovery exchanger and the ammonia synthesis catalyst in case of breakage of the heat exchange elements.

Said system may include an automatic control of the pressure of the heat exchange medium arranged to keep the pressure of the heat exchange medium below the pressure of the reactant gas inside the converter during a shut down.

In the event of a failure of the heat exchange elements the converter and the synthesis loop are normally shut down. The above automatic control ensures that during the shutdown procedure no heat exchange medium (e.g. water) comes into contact with the catalyst.

The following are still other aspects of the invention.

A broad aspect of the invention is a multi-bed reactor with an integrated heat exchanger wherein the heat exchanger is operatively placed between two consecutive catalytic beds contained in the multi-bed reactor, preferably in the hottest part of the reactor. The integrated heat exchanger is operated with an external fluid, i.e. a fluid which is not a process fluid of the reactor, such as a reactive stream directed to any of the catalytic beds.

When referring to two consecutive catalytic beds, reference is made to an upstream catalytic bed (also termed "first" catalytic bed) and a downstream catalytic bed (also termed "second" catalytic bed). In operation, a process stream effluent from the first bed, such as a partially reacted gas, is fed into the second bed for further reaction, possibly after the addition of another stream such as a quench stream.

A further aspect of the invention is a multi-bed reactor as above defined further including a heat exchanger or a quench system which is separate from the above heat exchanger operated with an external fluid, and is arranged to adjust the temperature of the process stream entering the downstream bed of said two consecutive catalytic beds. Accordingly the inlet temperature of said downstream bed can be adjusted without affecting the heat transfer to the external fluid.

A related advantage is that, for example, the inlet temperature of the downstream bed can be regulated without affecting the production of steam or superheated steam.

Another aspect is a multi-bed reactor as above defined wherein the inlet temperature of each of the catalytic beds contained in the reactor is independently adjustable. Accordingly the reactor may include a respective interbed heat exchanger or a quench system operatively placed between each pair of consecutive catalytic beds contained in the reactor so that, for each pair, the inlet temperature of the downstream bed can be independently controlled.

Another aspect of the invention is a multi-bed reactor as above defined including at least another heat exchanger, which is a gas pre-heater, arranged to transfer heat from a reacted gas withdrawn from at least one catalytic bed and a stream of a fresh reactive gas. More preferably the reactor is internally arranged so that an input of fresh gas is passed over the internal surface of the pressure vessel of the reactor before entering the gas pre-heater, so that the pressure vessel is cooled by the fresh gas.

The advantages of the invention will emerge even more clearly with the aid of the detailed description below relating to a number of preferred embodiments.

### Description of the figures

Fig. 1 shows a scheme of an ammonia converter according to an embodiment.
Fig. 2 is a functional scheme of an ammonia converter according to a preferred application.

### Detailed description of preferred embodiments

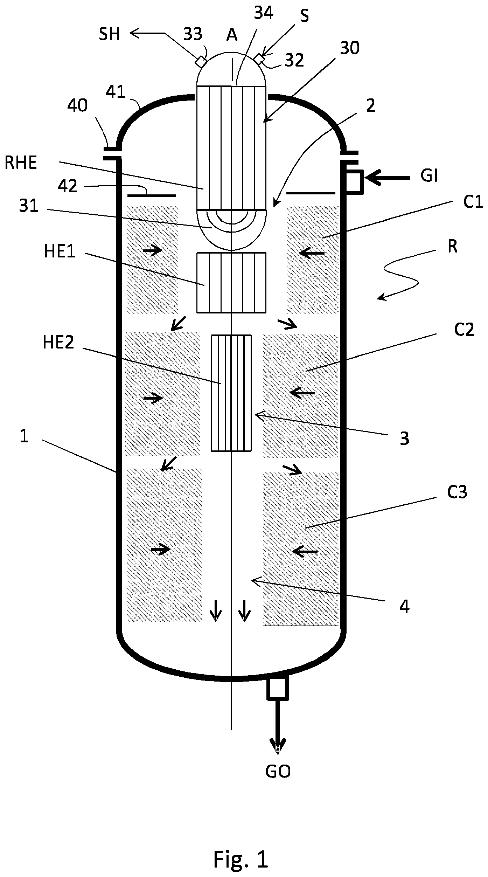

Fig. 1 illustrates the following items:
- R: Vertical ammonia converter
- A-A: Axis of the converter R
- 1: Pressure vessel of the converter R
- C1: First catalytic bed
- C2: Second catalytic bed
- C3: Third catalytic bed
- 2: Central cavity of the first catalytic bed C1
- 3: Central cavity of the second catalytic bed C2
- 4: Central cavity of the third catalytic bed C3
- RHE: Integrated recovery heat exchanger
- HE1: First inter-bed exchanger of the converter, fitted in the central cavity 2 of the first bed C1
- HE2: Second inter-bed heat exchanger of the converter, fitted in the central cavity 3 of the second bed C2.
- GI: Gas inlet (reactants)
- GO: Gas outlet (products)
- 30: bundle of u-tubes of the integrated exchanger RHE
- 31: lower part of the u-bundle 30
- 32: inlet of the tube side of the integrated exchanger RHE
- 33: outlet of the tube side of the integrated exchanger RHE
- 34: tubesheet of the u-bundle 30
- 40: top flange of the pressure vessel 1
- 41: top cover of the pressure vessel 1
- 42: top cover of a cartridge containing the catalytic beds
- S: saturated steam line connected to the input 32 of the tube bundle 30
- SH: superheated steam line connected to the output 33 of the tube bundle 30

The catalytic beds C1, C2 and C3 and the inter-bed heat exchangers HE1, HE2 for example are part of a cartridge fitted in the pressure vessel 1. The cartridge may be removable from the pressure vessel.

The catalytic beds C1, C2 and C3 have a cylindrical annular shape. Each bed has a central cavity 2, 3 and 4 respectively.

The figure is schematic and the internals of the converter are not illustrated in detail.

The converter R is configured internally so that the process gas traverses the catalytic beds with a radial or axial radial flow. The flow is directed inwardly from the outer surface of the bed towards the axis A-A as indicated by the arrows of Fig. 1.

The input gas GI is directed to the first bed C1 and may be preheated in one or more of the heat exchangers of the converter, for example in the inter-bed exchangers HE2 and HE1. The input gas may also pass in the annular space between the pressure vessel 1 and a catalytic cartridge in order to cool the pressure vessel 1. The preheated gas may be mixed with a portion of cold gas to carefully adjust the inlet temperature of the first catalytic bed. The converter may include an additional input for said cold gas.

The partially reacted hot effluent of the bed C1 passes in the region around the tubes 30 of the recovery exchanger RHE and around the tubes of the inter-bed heat exchanger HE1. Each of said heat exchangers is basically a bundle of tubes traversed by a suitable medium. The hot effluent gas passes around the tubes and transfers heat to the medium inside the tubes.

It can be appreciated that the recovery exchanger RHE has a first side, which is represented by the space around the tubes, and a second side, which is formed by the inside of the tubes. Said first side and second side are not in a communication so that the medium in the first side (hot process gas) does not mix with the medium in the second side (e.g. water or steam).

The recovery exchanger RHE may be for example a steam superheater. The input 32 and output 33 of the tube side may be connected to a steam system of the ammonia plant. For example when the exchanger RHE works as a steam superheater, the input 32 is fed with saturated steam and a superheated steam is collected at the output 33. Alternatively for example the input 32 may be fed with water which is evaporated in the exchanger RHE and steam is collected at the output 33. Fig. 1 illustrates an example wherein the input 32 is connected to a steam line S and the output 33 feeds a superheated steam line 33.

The figure illustrates a preferred embodiment wherein the heat exchanger RHE has a bundle 30 of u-tubes. The u-bundle 30 includes a bottom portion 31 where the tubes are curved. The bottom portion of the heat exchanger RHE (e.g. bottom portion of the bundle 30) may be accommodated within the cavity 2 of the first catalytic bed.

The medium inside the tubes of the inter-bed exchanger HE1 may be the fresh gas which is preheated before entering the first bed.

Fig. 1 illustrates a preferred embodiment where the first bed C1 has a slim design thanks to a reduced radial width, compared to the subsequent beds C2 and C3. This design of the first bed C1 increases the size of the cavity 2 making said cavity wider in the radial direction and longer in the axial direction, and thus facilitates the accommodation of the lower part of the recovery exchanger RHE and of the inter-bed heat exchanger HE1 in the cavity 2 of the first bed C1.

The recovery exchanger RHE is installed on top of the vertical converter R and above the inter-bed exchanger HE1. This arrangement makes the exchanger RHE easy to access and, if necessary, easy to remove from the converter. Particularly, in a preferred embodiment the tubesheet 34 is above the cover 41 of the vessel, which makes possible the extraction of the whole tube bundle 30 without removing the cover 41.

In an embodiment the recovery exchanger RHE may have a tubesheet which is directly flanged to the cover of the pressure vessel.

The integration of the exchanger RHE in the pressure vessel 1 of the converter provides a better exploitation of the volume in the upper region of the vessel, particularly the region above the cover 42 of the catalytic cartridge.

After a passage around the tubes of said recovery heat exchanger RHE and around the tubes of the first inter-bed heat exchanger HE1, the effluent gas from the first bed C1 is redirected to the second bed C2 which is also traversed inwardly. Then the effluent of the second bed passes through the second interbed heat exchanger HE2 installed in the cavity 3 of the second bed C2. Said second inter-bed heat exchanger HE2 may also be a tube heat exchanger and the medium inside the tubes may be incoming gas to be preheated. For example the incoming gas may be preheated in the heat exchanger HE2 and then in the exchanger HE1.

After a passage through the heat exchanger HE2 the process gas is directed to the third bed C3 which is also traversed with inward radial flow. The effluent of the third bed is collected in the space 4 and represent the fully reacted outlet gas GO. A heat exchanger may optionally be installed also in the space 4.

The arrows in Fig. 1 indicate schematically the gas flow. Suitable internals of the converter provide the necessary distribution and collection of the gas.

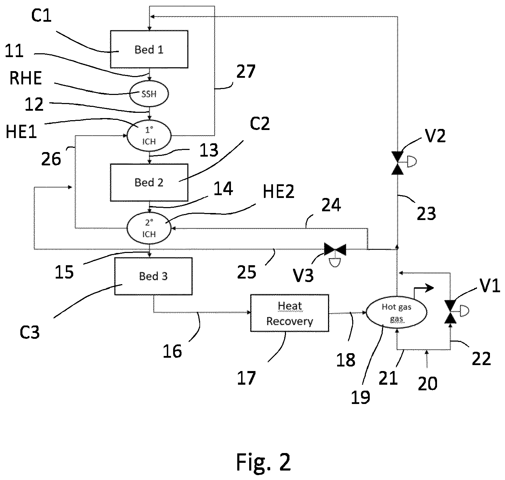

Fig. 2 illustrates a process scheme that can be implemented with the converter R of Fig. 1. The numerals in Fig. 2 denote the following.
11 partially reacted process gas effluent from the first bed C1 directed to the exchanger RHE
12 process gas after passage through the exchanger RHE and directed to the first inter-bed exchanger HE1
13 process gas after passage through the first inter-bed heat exchanger HE1 and directed to the inlet of the second bed C2
14 process gas effluent from the second bed C2
15 process gas at the inlet of the third bed C3
16 fully reacted process gas (products) effluent from the third bed C3
17 heat recovery heat exchanger
18 effluent of the heat exchanger 17
19 gas-gas heat exchanger
20 fresh process gas (reactants)
21 portion of gas 20 directed to the gas-gas heat exchanger 19
22 portion of gas 20 bypassing the gas-gas heat exchanger 19, controlled by valve V1.
23 cold fresh gas directed to the inlet of the first bed, controlled by valve V2
24 fresh gas directed to the inter-bed heat exchanger HE2
25 fresh gas bypassing the inter-bed heat exchanger HE2, controlled by valve V3
26 pre-heated fresh gas directed to the inter-bed heat exchanger HE1
27 fully pre-heated fresh gas effluent from exchanger HE1 and directed to the inlet of the first bed together with the gas 23.

The temperature of the process gas at the inlet of the beds is controlled via the valves V1, V2 and V3.

Particularly, the valve V2 controls the flow rate of the "cold shot" 23, i.e. a stream of fresh gas which is not preheated in the inter-bed exchangers HE2 and HE1. This cold gas 23 is mixed at the inlet of the first bed C1 with the fully preheated stream 27 effluent from the inter-bed exchanger HE1. The mixture of the stream 23 and stream 27 forms the inlet gas GI indicated in Fig. 1.

The partially reacted gas 11 from the first bed C1 is at elevated temperature (e.g. above 500 °C) and transfers heat to the steam S flowing in the tubes of the integrated recovery exchanger RHE. The so obtained superheated steam SH may be used internally in the process as a heat source or to produce energy. For example the steam SH is sent to one or more steam users of the ammonia plant. The steam may also be exported from the ammonia plant if appropriate.

The effluent 12, still at a high temperature, transfers heat in the first inter-bed exchanger HE1 to the reactant stream 26. Said stream 26 is the result of mixing the stream 24 preheated in the exchanger HE2 with the bypass stream 25. Therefore the temperature of said stream 26 is controlled basically by the valve V3 which controls the bypass line of stream 25. This influences, in turn, the temperature of the process stream 13, i.e. the inlet temperature of the second bed.

Also, the temperature of the cold gas in lines 23 and 25 is controlled by the valve V1, as it is the result of mixing the effluent of the exchanger 19 with the gas 22 bypassing the same.

The product stream 16 leaving the third bed C3 may be cooled in the recovery exchanger 17. This exchanger 17 and also the gas-gas exchanger 19 may be installed in the annular cavity 4 of the third bed (i.e. inside the pressure vessel) or may be external. The gas 18 after cooling in the exchanger 19 represents the product gas.

It can be appreciated that the valves V1, V2 and V3 operates on streams of cold gas. No valve is required on hot lines such as lines 26 or 27. This is a considerable advantage because a valve operating on a hot stream at high pressure would be a critical and expensive item.

The invention achieves the aims enunciated above. Particularly, it does not require additional pressure vessels, other than the vessel of the ammonia converter; it does not require high-pressure piping for connection to an external vessel; it does not require valves on high-temperature and high-pressure lines to control the process. It can be appreciated that the invention provides an efficient recovery of the heat generated by the chemical reaction, particularly of the heat contained in the hot process streams 11, 14 and 15.

## Claims

1. Ammonia converter comprising a plurality of catalytic beds (C1, C2, C3) for converting an input makeup gas into an ammonia-containing product gas wherein:
the catalytic beds (C1, C2, C3) have a cylindrical annular shape delimited by an outer cylindrical wall and an inner cylindrical wall;
the catalytic beds (C1, C2, C3) are arranged in a pressure vessel (1) of the converter sequentially from a first catalytic bed to a last catalytic bed according to a path of the gaseous flow from an inlet (GI) to an outlet (GO) of the converter, so that for each pair of consecutive beds the effluent gas of an upstream bed of the pair is further processed in the downstream bed of the pair;
the converter includes at least one integrated recovery heat exchanger (RHE) having a first side arranged to be traversed by reacted process gas effluent from at least one of the catalytic beds (C1, C2, C3) and a second side arranged to be traversed by a heat exchange medium which is not a reactive stream directed to any of the catalytic beds (C1, C2, C3) of the converter;
the converter includes a respective inter-bed heat exchanger (HE1, HE2) or a quench system operatively placed between each pair of consecutive catalytic beds (C1, C2; C2, C3) contained in the converter so that, for each pair, the inlet temperature of the downstream bed (C2; C3) can be independently controlled;
**characterized in that:**
said recovery heat exchanger (RHE) and said inter-bed heat exchanger (HE1) are arranged to be traversed in sequence by the hot process gas effluent from said catalytic bed, so that the effluent of said bed traverses the recovery heat exchanger (RHE) first, and then the inter-bed heat exchanger (HE1).

2. Converter according to claim 1, wherein said recovery heat exchanger (RHE) includes a plurality of heat exchange elements and optionally a shell around the heat exchange elements, said first side is a region around the heat exchange elements and said second side is an inside of the heat exchange elements.

3. Converter according to claim 2, wherein:
said recovery heat exchanger (RHE) is a tube heat exchanger with a bundle (30) of u-tubes or bayonet tubes connected to a tube sheet (34), the tube sheet being on top of the heat exchanger and the bundle of tubes extending downwards from the tube sheet.

4. Converter according to claim 3, wherein said tube sheet (34) of the recovery heat exchanger (RHE) is located above a top cover (41) of the pressure vessel (1) of the converter.

5. Converter according to any of the previous claims, wherein the pressure vessel (1) has a top cover (41) which includes a shell of the recovery heat exchanger (RHE).

6. Converter according to any of the previous claims, wherein said recovery heat exchanger (RHE) is at least partially accommodated in the central cavity (2) of at least one of the catalytic beds (C1).

7. Converter according to claim 6, wherein the central cavity (2) of at least one catalytic bed (C1) accommodates:
at least a portion of said recovery heat exchanger (RHE), and
an inter-bed heat exchanger (HE1) arranged to transfer heat from the hot effluent of the catalytic bed to a reactant gas stream directed to the same or another catalytic bed.

8. Converter according to any of the previous claims, wherein the at least one recovery heat exchanger (RHE) includes a recovery heat exchanger which is located above the first catalytic bed (C1) of the converter and is arranged so that the first side of the recovery heat exchanger is traversed by the effluent of said first catalytic bed.

9. Converter according to any of the previous claims, wherein the at least one recovery heat exchanger (RHE) includes a heat recovery exchanger which is placed downstream the second catalytic bed (C2) of the converter so that the first side of the recovery heat exchanger is traversed by the effluent of said second catalytic bed.

10. Converter according to any of the previous claims, wherein said recovery heat exchanger (RHE) is arranged for connection to a steam system.

11. Converter according to claim 10, wherein said recovery heat exchanger (RHE) is a steam superheater.

12. Converter according to claim 10, wherein said recovery heat exchanger (RHE) is a boiler.

13. Converter according to any of the previous claims, wherein said recovery heat exchanger (RHE) has a shell having a diameter smaller than the diameter of the catalyst beds.

14. Converter according to any of the previous claims, wherein said recovery heat exchanger (RHE) is equipped with a level measurement to monitor a loss of the heat exchange medium inside the pressure vessel (1).

15. Converter according to any of the previous claims, comprising a control system, wherein the control system is configured to operate a shutdown of the converter according to a shutdown procedure, wherein in the shutdown procedure the pressure of the heat exchange medium traversing the recovery heat exchanger (RHE) is maintained below the pressure of the reactant gas in the converter.

16. A converter according to any of the previous claims, wherein said heat exchanger, which is operated with an external fluid, is located between two consecutive catalytic beds (C1, C2, C3), the converter further including a heat exchanger or a quench system which is separate from said heat exchanger operated with an external fluid, and is arranged to adjust the temperature of the process stream entering the downstream bed of said two consecutive catalytic beds (C1, C2, C3).

17. A converter according to any of the previous claims, wherein said heat exchanger, which is operated with an external fluid, is located between two consecutive catalytic beds (C1, C2, C3), the converter further including at least another heat exchanger, which is a gas pre-heater, arranged to transfer heat from a reacted gas withdrawn from at least one catalytic bed to a stream of a fresh reactive gas, the converter being internally arranged so that an input of fresh gas is passed over the internal surface of the pressure vessel (1) of the converter before its admission to said gas pre-heater, so that the pressure vessel (1) is cooled by the fresh gas.

18. A plant for the synthesis of ammonia including:
an ammonia converter according to any of the previous claims;
a steam system;
wherein an input and an output of the second side of the recovery heat exchanger (RHE) integrated in the ammonia converter are connected to the steam system.

19. A process of synthesis of ammonia, comprising:
passing a makeup gas containing hydrogen and nitrogen through a plurality of annular catalytic beds (C1, C2, C3) arranged inside a pressure vessel (1) of an ammonia converter, including at least a first bed and a second bed, wherein said beds are arranged sequentially so that a partially reacted gas effluent from the first bed is further reacted in the second bed;
transferring heat from the effluent of at least one of said catalytic beds (C1, C2, C3) to a heat exchange medium, wherein said heat exchange medium is not a reactive stream of the ammonia synthesis process;
**characterized in that:**
said transfer of heat is performed in a recovery heat exchanger (RHE) which is integrated in the ammonia converter according to any of claims 1-17.

20. A process according to claim 19, wherein said heat exchange medium is water or steam and the process includes the production of steam or of superheated steam in said recovery heat exchanger (RHE).

21. A process according to claim 19, wherein the pressure of the heat exchange medium in the second side of said recovery heat exchanger (RHE) is lower than the pressure of the reactant process stream.

22. A process according to claim 19, wherein the pressure of the heat exchange medium in the second side of said recovery heat exchanger (RHE) is higher than the pressure of the reactant process stream.

## Patentansprüche

1. Ammoniakkonverter, umfassend eine Vielzahl von Katalysatorbetten (C1, C2, C3) zur Umwandlung eines zugeführten Nachspeisegases in ein ammoniakhaltiges Produktgas, wobei:
die Katalysatorbetten (C1, C2, C3) eine zylindrische Ringform haben, die durch eine zylindrische Außenwand und eine zylindrische Innenwand begrenzt sind;
die Katalysatorbetten (C1, C2, C3) in einem Druckbehälter (1) des Konverters sequentiell von einem ersten katalytischen Bett bis zu einem letzten katalytischen Bett angeordnet sind entsprechend dem Weg des Gasstroms von einem Einlass (GI) zu einem Auslass (GO) des Konverters, sodass für jedes Paar aufeinanderfolgender Betten das ausströmende Gas eines stromaufwärts gelegenen Betts des Paars im stromabwärts gelegenen Bett des Paares weiterverarbeitet wird;
der Konverter mindestens einen integrierten Rückgewinnungswärmetauscher (RHE), der eine erste Seite hat, die so angeordnet ist, dass sie von umgesetztem Prozessgas durchströmt werden kann, das aus mindestens einem der Katalysatorbetten (C1, C2, C3) ausströmt, und eine zweite Seite hat, die so angeordnet ist, dass sie von einem Wärmetauschermedium durchströmt werden kann, das kein Reaktorstrom ist, das auf eines der Katalysatorbetten (C1, C2, C3) des Tauschers gerichtet ist;
der Konverter jeweils einen Zwischenbett-Wärmetauscher (HE1, HE2) oder ein Abschrecksystem umfasst, das funktionsfähig zwischen jedes Paar aufeinanderfolgender in dem Konverter enthaltenen Katalysatorbetten (C1, C2; C2, C3) angeordnet ist, sodass für jedes Paar die Einlasstemperatur des stromabwärts gelebenen Betts (C2; C3) unabhängig geregelt werden kann;
**dadurch gekennzeichnet, dass:**
der Rückgewinnungswärmetauscher (RHE) und der ZwischenbettWärmetauscher (HE1) so angeordnet sind, dass sie nacheinander von dem heißen Prozessgas durchströmt werden, das aus dem Katalysatorbett ausströmt, sodass der Ausstrom des Betts den Rückgewinnungswärmetauscher (RHE) zuerst und dann den Zwischenbett-Wärmetauscher (HE1) durchströmt.

2. Konverter nach Anspruch 1, wobei der Rückgewinnungswärmetauscher (RHE) eine Vielzahl von Wärmetauscherelementen und optional einen Mantel um die Wärmetauscherelemente umfasst, wobei die erste Seite ein Bereich um die Wärmetauscherelemente ist und die zweite Seite eine Innenseite der Wärmetauscherelemente ist.

3. Konverter nach Anspruch 2, wobei:
der Rückgewinnungswärmetauscher (RHE) ein Röhrenwärmetauscher mit einem Bündel (30) U-Rohre oder Bajonettrohre mit einem Rohrboden (34) verbunden ist, wobei der Rohrboden oberhalb des Wärmetauschers ist und das Bündel Rohre vom Rohrboden sich nach unten erstreckt.

4. Konverter nach Anspruch 3, wobei der Rohrboden (34) des Rückgewinnungswärmetauschers (RHE) über einer oberen Abdeckung (41) des Druckbehälters (1) des Konverters angeordnet ist.

5. Konverter nach einem der vorherigen Ansprüche, wobei der Druckbehälter (1) eine obere Abdeckung (41) hat, die einen Mantel des Rückgewinnungswärmetauschers (RHE) umfasst.

6. Konverter nach einem der vorherigen Ansprüche, wobei der Rückgewinnungswärmetauscher (RHE) zumindest teilweise in dem zentralen Hohlraum (2) von mindestens einem Katalysatorbett (C1) angeordnet ist.

7. Konverter nach Anspruch 6, wobei der zentrale Hohlraum (2) mindestens eines Katalysatorbetts (C1) aufnimmt:
mindestens einen Teil des Rückgewinnungswärmetauschers (RHE), und einen Zwischenbettwärmetauscher (HE1), der eingerichtet ist, Wärme von dem heißen Ausstrom des Katalysatorbetts zu einem Reaktorgas zu transferieren, der zu demselben oder einem anderen Katalysatorbett gerichtet ist.

8. Konverter nach einem der vorherigen Ansprüche, wobei der mindestens eine Rückgewinnungswärmetauscher (RHE) einen Rückgewinnungswärmetauscher umfasst, der über dem ersten Katalysatorbett (C1) des Konverters angeordnet ist und so eingerichtet ist, dass die erste Seite des Rückgewinnungswärmetauschers von dem Ausstrom des ersten Katalysatorbetts durchströmt wird.

9. Konverter nach einem der vorherigen Ansprüche, wobei der mindestens eine Rückgewinnungswärmetauscher (RHE) einen Rückgewinnungswärmetauscher umfasst, der stromabwärts des zweiten Katalysatorbetts (C2) des Konverters angeordnet ist, sodass die erste Seite des Rückgewinnungswärmetauschers von dem Ausstrom des zweiten Katalysatorbetts durchströmt wird.

10. Konverter nach einem der vorherigen Ansprüche, wobei der Rückgewinnungswärmetauscher (RHE) eingerichtet ist zur Verbindung mit einem Dampfsystem.

11. Konverter nach Anspruch 10, wobei der Rückgewinnungswärmetauscher (RHE) ein Dampfüberhitzer ist.

12. Konverter nach Anspruch 10, wobei der Rückgewinnungswärmetauscher (RHE) ein Heizkessel ist.

13. Konverter nach einem der vorherigen Ansprüche, wobei der Rückgewinnungswärmetauscher (RHE) einen Mantel mit einem Durchmesser hat, der kleiner ist als der Durchmesser der Katalysatorbetten.

14. Konverter nach einem der vorherigen Ansprüche, wobei der Rückgewinnungswärmetauscher (RHE) mit einer Füllstandsmessung ausgestattet ist, um einen Verlust an Wärmetauschermedium in dem Druckbehälter (1) zu überwachen.

15. Konverter nach einem der vorherigen Ansprüche, umfassend ein Kontrollsystem, wobei das Kontrollsystem eingerichtet ist, ein Abschalten des Konverters entsprechend einer Abschaltprozedur durchzuführen, wobei bei der Abschaltprozedur der Druck des Wärmetauschermediums, das den Rückgewinnungswärmetauscher (RHE) durchströmt, unter dem Druck des Reaktorgases im Konverter gehalten wird.

16. Konverter nach einem der vorherigen Ansprüche, wobei der Wärmetauscher, der mit einer externen Flüssigkeit betrieben wird, zwischen zwei aufeinanderfolgenden Katalysatorbetten (C1, C2, C3) angeordnet ist, wobei der Konverter weiter einen Wärmetauscher oder ein Abschrecksystem umfasst, das getrennt von dem Wärmetauscher mit einem externen Fluid betrieben wird, und so angeordnet ist, dass er die Temperatur des Prozessstroms anpasst, der in das stromabwärts gelegene Bett der beiden aufeinanderfolgenden Katalysatorbetten (C1, C2, C3) einströmt.

17. Konverter nach einem der vorherigen Ansprüche, wobei der Wärmetauscher, der mit einem externen Fluid betrieben wird, zwischen zwei aufeinanderfolgenden Katalysatorbetten (C1, C2, C3) angeordnet ist, wobei der Konverter weiter mindestens einen anderen Wärmetauscher umfasst, der ein Gasvorwärmer ist, der angeordnet ist, abgezogene Wärme von einem Reaktorgas aus mindestens einem Katalysatorbett zu einem Strom frischen Gases zu transferieren, wobei der Konverter intern so angeordnet ist, sodass ein Zustrom von Frischgas über die Innenfläche des Druckbehälters (1) des Konverters geleitet wird, bevor es in den Gasvorwärmer eintritt, sodass der Druckbehälter (1) durch das frische Gas gekühlt wird.

18. Anlage zur Synthese von Ammoniak, umfassend:
einen Ammoniakkonverter nach einem der vorherigen Ansprüche;
ein Dampfsystem;
wobei ein Eingang und ein Ausgang der zweiten Seite des Rückgewinnungswärmetauschers (RHE), der in den Ammoniakkonverter integriert ist, mit dem Dampfsystem verbunden ist.

19. Verfahren zur Synthese von Ammoniak, umfassend:
Durchleiten eines Nachspeisegases, enthaltend Wasserstoff und
Stickstoff durch eine Vielzahl ringförmiger Katalysatorbetten (C1, C2, C3), die innerhalb eines Druckbehälters (1) eines Ammoniakkonverters angeordnet sind, die mindestens ein erstes Bett und ein zweites Bett umfassen, wobei die Betten sequentiell angeordnet sind, sodass ein teilweise umgesetzter Gasausstrom aus dem ersten Bett weiter in dem zweiten Bett umgesetzt wird;
Übertragen der Wärme des Ausstroms von mindestens einem Katalysatorbett (C1, C2, C3) zu einem Wärmetauschermedium, wobei das Wärmetauschermedium kein Reaktorstrom des Ammoniaksyntheseprozesses ist;
**dadurch gekennzeichnet, dass:**
die Übertragung von Wärme erfolgt in einem Rückgewinnungswärmetauscher (RHE) der in den Ammoniakkonverter integriert ist nach einem der Ansprüche 1 - 17.

20. Verfahren nach Anspruch 19, wobei das Wärmetauschermedium Wasser oder Dampf ist und das Verfahren die Produktion von Dampf oder überhitztem Dampf in dem Rückgewinnungswärmetauscher (RHE) umfasst.

21. Verfahren nach Anspruch 19, wobei der Druck des Wärmetauschermediums in der zweiten Seite des Rückgewinnungswärmetauschers (RHE) niedriger ist als der Druck des Reaktorprozessstroms.

22. Verfahren nach Anspruch 19, wobei der Druck des Wärmetauschermediums in der zweiten Seite des Rückgewinnungwärmetauschers (RHE) höher ist als der Druck des Reaktorprozessstroms.

## Revendications

1. Convertisseur d'ammoniac comprenant une pluralité de lits catalytiques (C1, C2, C3) pour convertir un gaz d'appoint d'entrée en un gaz-produit contenant de l'ammoniac dans lequel :
les lits catalytiques (C1, C2, C3) présentent une forme annulaire cylindrique délimitée par une paroi cylindrique externe et une paroi cylindrique interne ;
les lits catalytiques (C1, C2, C3) sont agencés dans une cuve de pression (1) du convertisseur de manière séquentielle depuis un premier lit catalytique jusqu'à un dernier lit catalytique selon un chemin de l'écoulement gazeux depuis une entrée (GI) vers une sortie (GO) du convertisseur, de telle sorte que pour chaque paire de lits consécutifs le gaz effluent d'un lit amont de la paire est en plus traité dans le lit aval de la paire ;
le convertisseur comporte au moins un échangeur de chaleur à récupération (RHE) intégré présentant un premier côté conçu pour être traversé par un effluent de gaz de traitement ayant réagi provenant d'au moins un des lits catalytiques (C1, C2, C3) et un deuxième côté conçu pour être traversé par un milieu d'échange de chaleur qui n'est pas un flux réactif dirigé vers l'un quelconque des lits catalytiques (C1, C2, C3) du convertisseur ;
le convertisseur comporte un échangeur de chaleur inter-lits (HE1, HE2) respectif ou un système de refroidissement opérationnellement placé entre chaque paire de lits catalytiques (C1, C2 ; C2, C3) consécutifs contenus dans le convertisseur de telle sorte que, pour chaque paire, la température d'entrée du lit aval (C2 ; C3) peut être régulée de manière indépendante ;
**caractérisé en ce que :**
ledit échangeur de chaleur à récupération (RHE) et ledit échangeur de chaleur inter-lits (HE1) sont conçus pour être traversés de manière séquentielle par l'effluent de gaz de traitement chaud provenant dudit lit catalytique, de telle sorte que l'effluent dudit lit traverse d'abord l'échangeur de chaleur à récupération (RHE) puis l'échangeur de chaleur inter-lits (HE1).

2. Convertisseur selon la revendication 1, dans lequel ledit échangeur de chaleur à récupération (RHE) comporte une pluralité d'éléments d'échange de chaleur et facultativement une enveloppe autour des éléments d'échange de chaleur, ledit premier côté est une région autour des éléments d'échange de chaleur et ledit deuxième côté est un intérieur des éléments d'échange de chaleur.

3. Convertisseur selon la revendication 2, dans lequel :
ledit échangeur de chaleur à récupération (RHE) est un échangeur de chaleur à tubes pourvu d'un groupe (30) de tubes en u ou tubes à baïonnette reliés à une plaque tubulaire (34), la plaque tubulaire se trouvant sur le dessus de l'échangeur de chaleur et le groupe de tubes s'étendant vers le bas depuis la plaque tubulaire.

4. Convertisseur selon la revendication 3, dans lequel ladite plaque tubulaire (34) de l'échangeur de chaleur à récupération (RHE) se situe au-dessus d'un couvercle supérieur (41) de la cuve de pression (1) du convertisseur.

5. Convertisseur selon l'une quelconque des revendications précédentes, dans lequel la cuve de pression (1) présente un couvercle supérieur (41) qui comporte une enveloppe de l'échangeur de chaleur à récupération (RHE).

6. Convertisseur selon l'une quelconque des revendications précédentes, dans lequel ledit échangeur de chaleur à récupération (RHE) est au moins partiellement logé dans la cavité centrale (2) d'au moins un des lits catalytiques (C1).

7. Convertisseur selon la revendication 6, dans lequel la cavité centrale (2) d'au moins un lit catalytique (C1) loge :
au moins une partie dudit échangeur de chaleur à récupération (RHE), et
un échangeur de chaleur inter-lits (HE1) conçu pour transférer la chaleur de l'effluent chaud du lit catalytique vers un flux gazeux réactif dirigé vers le même ou un autre lit catalytique.

8. Convertisseur selon l'une quelconque des revendications précédentes, dans lequel l'au moins un échangeur de chaleur à récupération (RHE) comporte un échangeur de chaleur à récupération qui est situé au-dessus du premier lit catalytique (C1) du convertisseur et est agencé de telle sorte que le premier côté de l'échangeur de chaleur à récupération est traversé par l'effluent dudit premier lit catalytique.

9. Convertisseur selon l'une quelconque des revendications précédentes, dans lequel l'au moins un échangeur de chaleur à récupération (RHE) comporte un échangeur de chaleur à récupération qui est placé en aval du deuxième lit catalytique (C2) du convertisseur de telle sorte que le premier côté de l'échangeur de chaleur à récupération est traversé par l'effluent dudit deuxième lit catalytique.

10. Convertisseur selon l'une quelconque des revendications précédentes, dans lequel ledit échangeur de chaleur à récupération (RHE) est conçu pour une liaison à un système à vapeur.

11. Convertisseur selon la revendication 10, dans lequel ledit échangeur de chaleur à récupération (RHE) est un surchauffeur de vapeur.

12. Convertisseur selon la revendication 10, dans lequel ledit échangeur de chaleur à récupération (RHE) est une chaudière.

13. Convertisseur selon l'une quelconque des revendications précédentes, dans lequel ledit échangeur de chaleur à récupération (RHE) présente une enveloppe d'un diamètre inférieur au diamètre des lits catalytiques.

14. Convertisseur selon l'une quelconque des revendications précédentes, dans lequel ledit échangeur de chaleur à récupération (RHE) est équipé d'une mesure de niveau pour surveiller une perte du milieu d'échange de chaleur à l'intérieur de la cuve de pression (1).

15. Convertisseur selon l'une quelconque des revendications précédentes, comprenant un système de commande, dans lequel le système de commande est configuré pour actionner une interruption du convertisseur selon une procédure d'interruption, dans lequel lors de la procédure d'interruption la pression du milieu d'échange de chaleur traversant l'échangeur de chaleur à récupération (RHE) est maintenue sous la pression du gaz réactif dans le convertisseur.

16. Convertisseur selon l'une quelconque des revendications précédentes, dans lequel ledit échangeur de chaleur, qui est actionné avec un fluide externe, se situe entre deux lits catalytiques (C1, C2, C3) consécutifs, le convertisseur comportant en outre un échangeur de chaleur ou un système de refroidissement qui est séparé dudit échangeur de chaleur actionné avec un fluide externe, et est conçu pour régler la température de la vapeur de traitement entrant dans le lit aval desdits deux lits catalytiques (C1, C2, C3) consécutifs.

17. Convertisseur selon l'une quelconque des revendications précédentes, dans lequel ledit échangeur de chaleur, qui est actionné avec un fluide externe, se situe entre deux lits catalytiques (C1, C2, C3) consécutifs, le convertisseur comportant en outre au moins un autre échangeur de chaleur, qui est un préchauffeur de gaz, conçu pour transférer de la chaleur depuis un gaz ayant réagi extrait d'au moins un lit catalytique vers un flux d'un gaz réactif frais, le convertisseur étant intérieurement agencé de telle sorte qu'une entrée de gaz frais est passée par-dessus la surface interne de la cuve de pression (1) du convertisseur avant son admission dans ledit préchauffeur de gaz, de telle sorte que la cuve de pression (1) est refroidie par le gaz frais.

18. Installation pour la synthèse d'ammoniac comportant :
un convertisseur d'ammoniac selon l'une quelconque des revendications précédentes ;
un système à vapeur ;
dans laquelle une entrée et une sortie du deuxième côté de l'échangeur de chaleur à récupération (RHE) intégré dans le convertisseur d'ammoniac sont reliées au système à vapeur.

19. Processus de synthèse d'ammoniac, comprenant :
le passage d'un gaz d'appoint contenant de l'hydrogène et de l'azote à travers une pluralité de lits catalytiques annulaires (C1, C2, C3) agencés à l'intérieur d'une cuve de pression (1) d'un convertisseur d'ammoniac, comportant au moins un premier lit et un deuxième lit, dans lequel lesdits lits sont agencés de manière séquentielle de telle sorte qu'un effluent de gaz ayant partiellement réagi depuis le premier lit réagit en plus dans le deuxième lit ;
le transfert de chaleur depuis l'effluent d'au moins un desdits lits catalytiques (C1, C2, C3) vers un milieu d'échange de chaleur, dans lequel ledit milieu d'échange de chaleur n'est pas un flux réactif du processus de synthèse d'ammoniac :
**caractérisé en ce que :**
ledit transfert de chaleur est réalisé dans un échangeur de chaleur à récupération (RHE) qui est intégré dans le convertisseur d'ammoniac selon l'une quelconque des revendications 1 à 17.

20. Processus selon la revendication 19, dans lequel ledit milieu d'échange de chaleur est de l'eau ou de la vapeur et le processus comporte la production de vapeur ou de vapeur surchauffée dans ledit échangeur de chaleur à récupération (RHE).

21. Processus selon la revendication 19, dans lequel la pression du milieu d'échange de chaleur dans le deuxième côté dudit échangeur de chaleur à récupération (RHE) est inférieure à la pression du flux de traitement de réactif.

22. Processus selon la revendication 19, dans lequel la pression du milieu d'échange de chaleur dans le deuxième côté dudit échangeur de chaleur à récupération (RHE) est supérieure à la pression du flux de traitement de réactif.
